# EUROPÄISCHE PATENTSCHRIFT

(11) **EP 3 207 267 B1**
(45) Veröffentlichungstag und Bekanntmachung des Hinweises auf die Patenterteilung: **29.08.2018**
(21) Anmeldenummer: 15790447.5
(22) Anmeldetag: 03.09.2015
(51) Int. Cl.: F16C 17/02, F16C 19/18, F16C 19/52, F16C 21/00, F16C 33/37, F16C 33/60, F16C 39/02

(54) **LAGERANORDNUNG FÜR EINE TIEFBOHREINRICHTUNG**
BEARING ARRANGEMENT FOR A DEEP DRILLING DEVICE
ENSEMBLE DE ROULEMENT POUR UN DISPOSITIF DE SONDAGE ET DE FORAGE

(30) Priorität: 14.10.2014 DE 102014220792
(43) Veröffentlichungstag der Anmeldung: 23.08.2017
(73) Patentinhaber: Schaeffler Technologies AG & Co. KG, 91074 Herzogenaurach (DE)
(72) Erfinder: SCHARTING, Stefan, 97469 Gochsheim (DE)
(86) Internationale Anmeldenummer: PCT/DE2015/200451
(87) Internationale Veröffentlichungsnummer: WO 2016/058602

(56) Entgegenhaltungen:
- DE-A1- 2 527 237
- DE-B4- 10 162 473
- DE-U- 1 907 632
- US-A1- 2014 116 780

## Beschreibung

Die Erfindung betrifft eine Lageranordnung für einen von Spülflüssigkeit durchströmten Bohrkopf einer Tiefbohreinrichtung, mit mehreren radial äußeren und radial inneren Lagerringen, bei der die radial äußeren Lagerringe koaxial über den radial inneren Lagerringen angeordnet sind, bei der radial zwischen den Lagerringen Kugeln angeordnet sind, welche in Laufrillen der Lagerringe abrollen, und bei der die Laufrillen axial beiderseits von Schultern mit parallel zu einer Lagerlängsachse verlaufenden, einander gegenüberliegenden Schulterflächen begrenzt sind. Eine derartige Lageranordnung einer Tiefbohreinrichtung ist aus der DE 101 62 473 B4 bekannt. Sie umfasst eine größere Anzahl axial hintereinander angeordneter Kugellager, die als 4-Punktkugellager ausgebildet und zu einem Kugellagerstapel zusammengefügt sind. Bei diesen 4-Punktkugellager sind die radial äußeren Lagerringe und die radial inneren Lagerringe geteilt ausgebildet. Es ist bekannt, dass 4-Punktkugellager sowohl Axialkräfte als auch Radialkräfte übertragen können, jedoch wird häufig noch ein Gleitlager axial vor und/oder hinter dem Kugellagerstapel angeordnet, um die 4-Punktkugel-lager von zu großen Radialkräften zu entlasten. Hierdurch ist die Lageranordnung um dieses wenigstens eine Gleitlager axial verlängert, so dass eine solche Lageranordnung in Längsrichtung einen größeren Bauraum erfordert und der minimal mögliche Richtungsänderungsradius für gelenkte Bohrköpfe nachteilig vergrößert ist.

US 2014/0116780 A1 offenbart die Merkmale des Oberbegriffs von Anspruch 1.

Vor diesem Hintergrund liegt der Erfindung die Aufgabe zugrunde, eine Lageranordnung vorzustellen, die sowohl Radialgleitlager als auch Axialkugellager aufweist, und deren axiale Erstreckung im Wesentlichen einer Lageranordnung ausschließlich aus 4-Punktkugellagern entspricht.

Die Lösung dieser Aufgabe wird durch eine Lageranordnung mit den Merkmalen des Anspruch1 erreicht. Vorteilhafte Weiterbildungen sind in den Unteransprüchen definiert.

Demnach geht die Erfindung aus von einer Lageranordnung für einen von Spülflüssigkeit durchströmten Bohrkopf einer Tiefbohreinrichtung, mit mehreren radial äußeren und radial inneren Lagerringen, bei der die radial äußeren Lagerringe koaxial über den radial inneren Lagerringen angeordnet sind, bei der radial zwischen den Lagerringen Kugeln angeordnet sind, welche in Laufrillen der Lagerringe abrollen, und bei der die Laufrillen axial beiderseits von Schultern mit parallel zu einer Lagerlängsachse verlaufenden, einander gegenüberliegenden Schulterflächen begrenzt sind. Bei dieser Lageranordnung ist zur Lösung der gestellten Aufgabe vorgesehen, dass der Innendurchmesser der Schulterflächen der radial äußeren Lagerringe und der Außendurchmesser der Schulterflächen der radial inneren Lagerringe so bemessen sind, dass ein die Funktion von parallelen Radialgleitlagern ergebenes radiales Spiel vorhanden ist.

Dadurch, dass die Schulterflächen der Schultern beiderseits der Laufrillen der 4-Punkt-kugellager Gleitlager bilden, ist ein kombiniertes Lager geschaffen, welches mehrere Axial-Radial-Wälzlager und Radial-Gleitlager aufweist, dessen Länge genau derjenigen Länge entspricht, welche ein Lagerstapel aufweist, der nur aus 4-Punktkugellagern besteht. Ein gesondertes, gemäß dem Stand der Technik axial hinter oder vor dem Stapel aus 4-Punktkugellagern anzuordnendes Gleitlager wird Kosten sparend nicht benötigt. Außerdem kann durch die Integration der radialen Führung in die Axiallager die axiale Länge der gesamten Lageranordnung vermindert werden. Hierdurch lässt sich der Abstand zwischen dem Bohrkopf und einem Knick für gerichtete Bohrungen verkürzen. Dies ermöglicht vorteilhaft kleinere Radien des Bohrstrangs.

Gemäß einer vorteilhaften Ausführungsform können die Schulterflächen der radial inneren und/oder der radial äußeren Lagerringe Nuten zum Durchleiten der Spülflüssigkeit aufweisen, sofern der Durchfluss durch die Lageranordnung durch das eingestellte radiale Lagerspiel nicht ausreichen sollte. Vorzugsweise können die Nuten bezüglich der Lagerlängsachse unter einem Winkel angeordnet sein, um nur eine durch die Breite der Nuten bedingte Unterbrechung des Schmierfilms des Gleitlagers zu verursachen.

Um die Montage eines 4-Punktkugellagers des Kugellagerbereichs der erfindungsgemäßen Lageranordnung zu vereinfachen, können die radial äußeren und/oder radial inneren Lagerringe in einer Ebene geteilt ausgebildet sein, welche senkrecht zur Lagerlängsachse mittig durch die Laufrillen.

Die Lageranordnung weist mindestens eine Kugelreihe mit den zugehörigen Lagerringen auf. Die axial endseitigen Endringe der Lageranordnung können länger sein, als dies bei 4-Punktkugellagern für Bohrköpfe für vergleichbare Betriebslasten üblich ist, insbesondere zur Vermindung des Verschleißes und der Flächenpressung in dem Radialgleitlager.

Vorzugsweise ist vorgesehen, dass mehrere Kugelreihen mit dem zugehörigen Lagerringen zu einem Lagerstapel zusammengefügt sind, und dass die Endringe länger ausgebildet sind, als die zwischen diesen Endringen angeordneten Lagerringe.

Durch die Integration der radialen Gleitlager in die als 4-Punktlager ausgebildeten Axial-Radial-Wälzlager verringert sich der axiale Abstand der radialen Abstützstellen, wodurch das Kippmoment bei gleicher aufgebrachter Kraft ansteigt. Um diesen Effekt zu verringern, kann die Anzahl der Kugelreihen mit den zugehörigen Lagerringen größer sein, als dies bei konventionellen 4-Punktlagern für Bohrköpfe bei vergleichbaren Betriebslasten üblich ist.

Da die Lageranordnung von einer Spülflüssigkeit durchströmt wird, welche unvermeidlicher Verunreinigungen enthält, die zu einem zu schnellen Verschleiß der Lageranordnung führen, kann vorgesehen sein, dass wenigstens die Schulterflächen der radial äußeren Lagerringe und/oder die Schulterflächen der radial inneren Lagerringe mit einer reibungs- und/oder verschleißmindernden Beschichtung versehen sind, welche vorzugsweise aus einem tribologischen Schichtsystem besteht. Dieses tribologische Schichtsystem kann mittels des Triondur®-Verfahrens aufgebracht sein. Triondur® ist ein eingetragenes Warenzeichen der Anmelderin. Insbesondere kann die reibungs- und/oder verschleißmindernde Beschichtung aus Diamantschichten bestehen.

Die Erfindung wird nachstehend anhand von in der Zeichnung dargestellten Ausführungsbeispielen weiter erläutert. In dieser Zeichnung zeigt
- Fig. 1: eine Antriebswelle eines Bohrkopfes mit einer Lageranordnung,
- Fig. 2: die Lageranordnung gemäß Fig. 1 im schematischen Längsschnitt gemäß einer ersten Ausführungsform der Erfindung,
- Fig. 3: eine zweite Ausführungsform der Lageranordnung gemäß Fig. 1, und
- Fig. 4: einen radialen Querschnitt durch die Lageranordnung der Figuren 2 und 3.

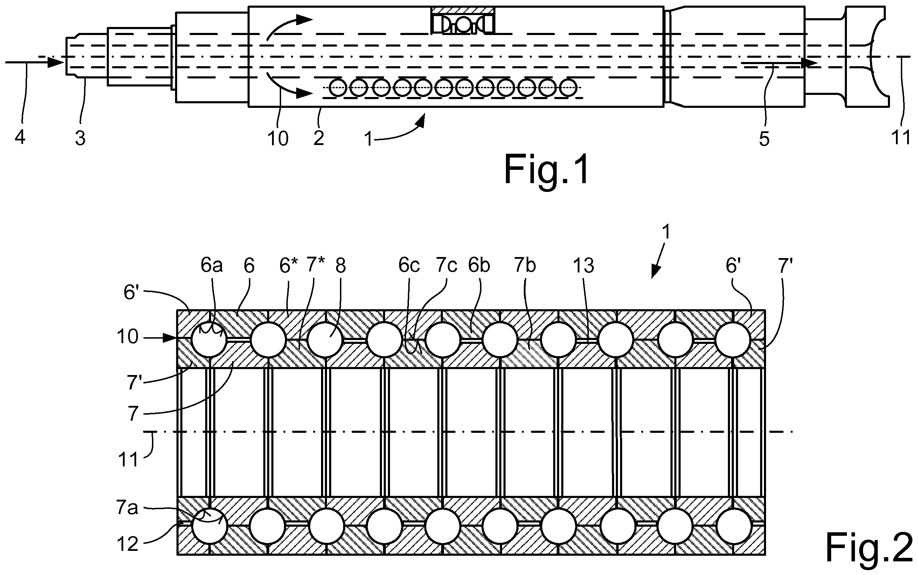

In Fig. 1 ist demnach eine Lageranordnung 1 einer Antriebswelle eines Bohrkopfes dargestellt. Die Antriebswelle ist radial innerhalb der Lageranordnung 1 angeordnet und als Hohlwelle 3 ausgebildet. Die Hohlwelle 3 ist mittels der Lageranordnung 1 in einem drehfesten Gehäuse 2 abgestützt und überträgt ein Antriebsdrehmoment von einer Antriebsturbine (nicht dargestellt) auf den Bohrkopf (nicht dargestellt). In die Hohlwelle 3 wird eine Spülflüssigkeit gemäß einer Flussrichtung 4 eingeleitet, mit der die Antriebsturbine betrieben wird. Axial vor der Lageranordnung 1 wird ein Teil der Spülflüssigkeit durch Austrittsöffnungen 10 in der Hohlwelle 3 in die Lageranordnung 1 geleitet, um die dortige Wälzlagerung zu kühlen und zu schmieren, sowie um einen Tragfilm in dem in die Lageranordnung integrierten Gleitlager zu bilden. Mit einem größeren Anteil der Spülflüssigkeit, welcher aus der Hohlwelle 3 im Bereich 5 durch Öffnungen in derselben austritt, wird dann der Bohrkopf gekühlt und geschmiert. Da die Spülflüssigkeit immer etwas verunreinigt ist, gelangen ständig Verunreinigungen in die Lageranordnung 1.

In Fig. 2 ist die Lageranordnung 1 der Fig. 1 dargestellt, welche gemäß einer ersten Ausführungsform ausgebildet ist und die Hohlwelle 3 in dem Gehäuse 2 lagert. Bei dieser Lageranordnung 1 sind mehrere vollkugelige Radial-Axialkugellager (4-Punktlager) axial hintereinander zu einem Stapel aufgereiht. Jedes der 4-Punktlager weist zwei radial äußere Lagerringe 6, 6* und zwei radial innere Lagerringe 7, 7* auf. Jeweils zwei axial unmittelbar benachbarte radial äußere Lagerringe 6, 6* bilden zusammen eine radial äußere Laufrille 6a und jeweils zwei axial unmittelbar benachbarte radial innere Lagerringe 7, 7* bilden zusammen eine radial innere Laufrille 7a. Die beiden Laufrillen 6a, 7a eines jeden 4-Punktlagers sind demnach durch eine Trennebene radial geteilt, welche senkrecht auf der Lagerlängsachse 11 steht.

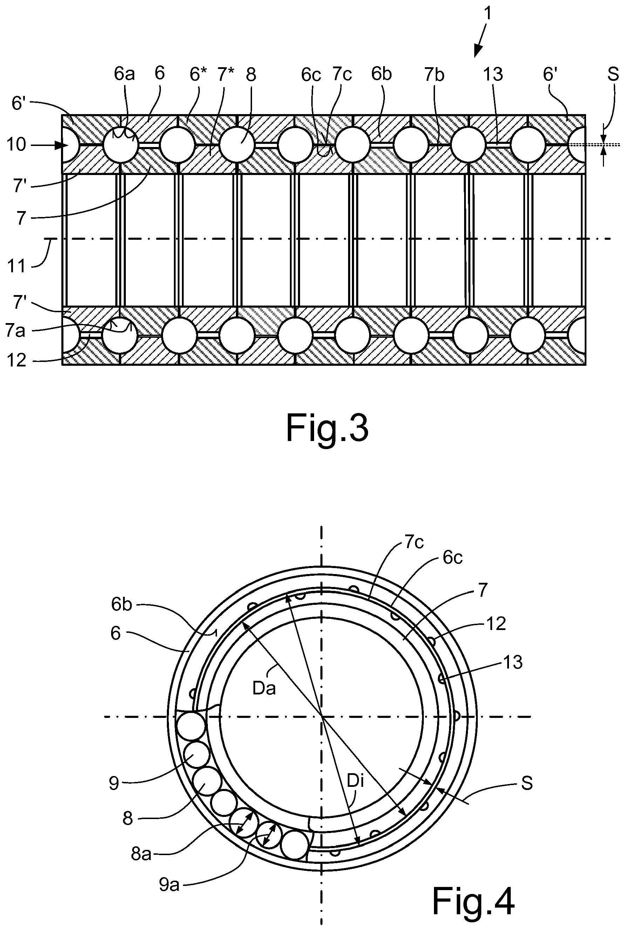

Die in Fig. 2 dargestellte Lageranordnung 1 weist axial endseitig jeweils einen Endring 6', 7' auf, die im Vergleich zu den übrigen Lagerringen 6, 7 kürzer sind. Demgegenüber sind die Endringe 6', 7' bei der zweiten Ausführungsform gemäß Fig. 3 geometrisch und längenbezogen identisch wie die übrigen Lagerringe 6, 6*, 7, 7* ausgebildet. Die axial längeren Endringe 6', 7' sind vorteilhaft, um den Verschleiß und die Flächenpressung in den Endringen 6', 7' durch aufgebrachte Kippmomente zu verringern. In diesem Fall ist es auch möglich, die Endringe 6', 7' ohne die in Fig. 3 dargestellten halben Laufrillen auszubilden.

In den Laufrillen 6a, 7a sind Last tragende Kugeln 8 angeordnet, die vorzugsweise als Keramikkugeln ausgebildet sind. Zwischen zwei der last tragenden Keramikkugeln 8 ist eine vorzugsweise eine etwas kleinere Trennkugel 9 aus Stahl angeordnet. Die Anordnung der Kugeln 8, 9 aus Stahl und Keramik ist in Fig. 4 in einem radialen Querschnitt durch die Lageranordnung 1 dargestellt. In jedem einzelnen 4-Punktlager der Lageranordnung 1 sind dabei tragende Keramikkugeln 8 und trennende Stahlkugeln 9 eingesetzt. Die radial äußeren Lagerringe 6, 6*, 6' und die radial inneren Lagerringe 7, 7*, 7' bestehen aus einem Stahl. Die Stahlkugeln 9 können aus einem Wälzlagerstahl, aus einem rostfreien Wälzlagerstahl oder aus einem verschleißfesten Stahl gefertigt sein.

Die radial äußeren Lagerringe 6, 6* und die radial inneren Lagerringe 7, 7* weisen axiale Schultern 6b bzw. 7b auf, welche in radialen Schulterflächen 6c, 7c enden. Diese radialen Schulterflächen 6c, 7c erstrecken sich demnach axial zwischen den benachbarten Laufrillen 6a, 7a. Die inneren Durchmesser Di der Schulterflächen 6c der Schultern 6b an den radial äußeren Lagerringen 6, 6*, 6' und die Außendurchmesser Da der Schulterflächen 7c der Schultern 7b an den radial inneren Lagerringen 7, 7*, 7' sind so bemessen, dass ein radiales Spiel S zwischen den radial gegenüber angeordneten Schulterflächen 6c, 7c gebildet ist. Dieses radiale Spiel S ermöglicht es diesen Schulterflächen 6c, 7c die Funktion von parallelen Radialgleitlagerflächen auszuüben. Das radiale Spiel S zwischen den radial gegenüber angeordneten Schulterflächen 6c, 7c beträgt nur wenige Hundertstel Millimeter. In diesen Ausführungsbeispielen sind in den Schultern 7b der radial inneren Lagerringe 7, 7*, 7' Nuten 13 und Nuten 12 in den Schultern 6b der radial äußeren Lagerringe 6, 6*, 6' ausgebildet sind, um einen ausreichenden Durchfluss des Spülmittels durch die Lageranordnung 1 zu gewährleisten. Diese Nuten 12, 13 sind in den Figuren 3 als in Axialrichtung verlaufend dargestellt, jedoch wird es bevorzugt, diese Nuten 12, 13 unter einem Winkel zur Lagerlängsachse 11 auszubilden, um den Tragfilm der Spülflüssigkeit nicht über die gesamte Breite der Lagerringe 6, 6*, 6', 7, 7*, 7' zu unterbrechen.

Fig. 4 zeigt eine Kugelreihe eines 4-Punktlagers der Lageranordnung in der axialen Draufsicht. Die tragenden Keramikkugeln 8 weisen erkennbar einen Durchmesser 8a auf, der geringfügig größer ist als der Durchmesser 9a der umfangsbezogen benachbarten Stahlkugeln 9. Es wird aus dieser Darstellung deutlich, dass die Keramikkugeln 8 als Wälzpartner nur Lagerbestandteile aus Stahl haben, nämlich die Stahlkugeln 9 und die beiden jeweils zugeordneten Lagerringe 6, 6*, 6', 7, 7*, 7'. Die im Durchmesser 9a kleineren Stahlkugeln 9 müssen um so viel kleiner als die Keramikkugeln 8 sein, dass bei einer Maximalbelastung der Lageranordnung 1 diese trennenden Stahlkugeln 9 nicht zu tragenden Kugeln werden. Die Keramikkugeln 8 können aus Vollkeramik oder aus einem Trägermaterial, das mit Keramik beschichtet ist, bestehen. Das Keramikmaterial kann beispielsweise aus Siliziumnitrid oder Zirkoniumoxid bestehen.

In Fig. 4 ist auch das sich zwischen den Schulterflächen 6c und 7c ergebende Spiel S dargestellt, da der Innendurchmesser Di der Schulterflächen 6c geringfügig größer ist als der Außendurchmesser Da der Schulterflächen 7c. Des Weiteren sind auch die Nuten 12 und 13 in den Schultern 6b und 7b erkennbar, welche den Durchfluss der Spülflüssigkeit durch die Lageranordnung 1 begünstigen.

Wenigstens die Schulterflächen 6c der radial äußeren Lagerringe 6, 6*, 6' und/oder die Schulterflächen 7c der radial inneren Lagerringe 7, 7*, 7' sind mit einer reibungs- und/oder verschleißmindernden Beschichtung 14, 15 versehen, die vorzugsweise aus einem tribologischen Schichtsystem besteht, das beispielsweise mittels des Triondur®-Verfahrens aufgebracht wird. Vorzugsweise, aber nicht ausschließlich, handelt es sich bei dieser reibungs- und/oder verschleißmindernden Beschichtung 14, 15 um Diamantschichten.

### Bezugzeichenliste

- 1: Lageranordnung
- 2: Gehäuse
- 3: Hohlwelle, Antriebswelle
- 4: Flussrichtung der Spülflüssigkeit
- 5: Austritt der Spülflüssigkeit
- 6, 6*: Radial äußere Lagerringe
- 6a: Laufrillen in den äußeren Lagerringen 6, 6*
- 6b: Schultern an den äußeren Lagerringen 6, 6*, 6'
- 6c: Schulterflächen an den Schultern 6b
- 6': Radial äußerer Endring
- 7, 7*: Radial innere Lagerringe
- 7a: Laufrillen in den inneren Lagerringen 7, 7*
- 7b: Schultern an den inneren Lagerringen 7, 7*, 7'
- 7c: Schulterflächen an den Schultern 7b
- 7': Radial innerer Endring
- 8: Tragende Keramikkugeln
- 8a: Durchmesser der tragenden Keramikkugeln
- 9: Trennende Stahlkugeln
- 9a: Durchmesser der trennenden Stahlkugeln
- 10: Austrittsöffnungen in der Hohlwelle für die Spülflüssigkeit
- 11: Lagerlängsachse
- 12: Nuten in den Schultern 6b
- 13: Nuten in den Schultern 7b
- 14: Beschichtung
- 15: Beschichtung
- Di: Innendurchmesser der Schulterflächen 6c
- Da: Außendurchmesser der Schulterflächen 7c
- S: Radiales Spiel zwischen den Schulterflächen 6c und 7c

## Patentansprüche

1. Lageranordnung (1) für einen von Spülflüssigkeit durchströmten Bohrkopf einer Tiefbohreinrichtung, mit mehreren radial äußeren und radial inneren Lagerringen (6, 6*, 6', 7, 7*, 7'), bei der die radial äußeren Lagerringe (6, 6*, 6') koaxial über den radial inneren Lagerringen (7, 7*, 7') angeordnet sind, bei der radial zwischen den Lagerringen (6, 6*, 6', 7, 7*, 7') Kugeln (8, 9) angeordnet sind, welche in Laufrillen (6a, 7a) der Lagerringe (6, 6*, 6', 7, 7*, 7') abrollen, und bei der die Laufrillen (6a, 7a) axial beiderseits von Schultern (6b, 7b) mit parallel zu einer Lagerlängsachse (11) verlaufenden, einander gegenüberliegenden Schulterflächen (6c, 7c) begrenzt sind, **dadurch gekennzeichnet, dass** der Innendurchmesser (Di) der Schulterflächen (6c, 7c) der radial äußeren Lagerringe (6, 6*, 6') und der Außendurchmesser (Da) der Schulterflächen (7c) der radial inneren Lagerringe (7, 7*, 7') so bemessen sind, dass ein die Funktion von parallelen Radialgleitlagern ergebenes radiales Spiel (S) vorhanden ist.

2. Lageranordnung nach Anspruch 1, **dadurch gekennzeichnet, dass** die Schulterflächen (6c, 7c) der radial inneren und/oder der radial äußeren Lagerringe (6, 6*, 6', 7, 7*, 7') Nuten (12, 13) zum Durchleiten der Spülflüssigkeit aufweisen.

3. Lageranordnung nach Anspruch 1 oder 2, **dadurch gekennzeichnet, dass** jeder radial äußere und/oder radial innere Lagerring (6, 6*, 6', 7, 7*, 7') in einer Ebene senkrecht zur Lagerlängsachse (11) mittig durch die Laufrillen (6a, 7a) geteilt ist und ein 4-Punktlager bildet.

4. Lageranordnung nach Anspruch 1, 2 oder 3, **dadurch gekennzeichnet, dass** die Lageranordnung (1) mindestens eine Kugelreihe mit den zugehörigen Lagerringen (6, 6*, 6', 7, 7*, 7') aufweist, und dass axial endseitige Endringe (6', 7') axial länger ausgeführt sind, als dies bei 4-Punktlagern für Bohrköpfe bei vergleichbaren Betriebslasten üblich ist.

5. Lageranordnung nach einem der Ansprüche 1 bis 3, **dadurch gekennzeichnet, dass** mehrere Kugelreihen mit dem zugehörigen Lagerringen (6, 6*, 6', 7, 7*, 7') zu einem Lagerstapel zusammengefügt sind, und dass die Endringe (6', 7') länger ausgebildet sind, als die zwischen diesen Endringen (6', 7') angeordneten Lagerringe (6, 6*, 6', 7, 7*, 7').

6. Lageranordnung nach einem der Ansprüche 1 bis 5, **dadurch gekennzeichnet, dass** die Anzahl der Kugelreihen mit den zugehörigen Lagerringen (6, 6*, 6', 7, 7*, 7') größer ist, als dies bei 4-Punklagern für Bohrköpfe bei vergleichbaren Betriebslasten üblich ist.

7. Lageranordnung nach einem der Ansprüche 1 bis 6, **dadurch gekennzeichnet, dass** die Schulterflächen (6c) der radial äußeren Lagerringe (6, 6*, 6') und/oder die Schulterflächen (7c) der radial inneren Lagerringe (7, 7*, 7') mit einer reibungsmindernden und/oder verschleißmindernden Beschichtung (14, 15) versehen sind.

8. Lageranordnung nach Anspruch 7, **dadurch gekennzeichnet, dass** die reibungs- und/oder verschleißmindernde Beschichtung (14, 15) aus einem tribologischen Schichtsystem besteht.

9. Lageranordnung nach Anspruch 8, **dadurch gekennzeichnet, dass** das tribologische Schichtsystem mittels des Triondur®-Verfahrens aufgebracht ist.

10. Lageranordnung nach einem der Ansprüche 7 bis 9, **dadurch gekennzeichnet, dass** die reibungs- und/oder verschleißmindernde Beschichtung (14, 15) Diamantschichten besteht.

## Claims

1. Bearing arrangement (1) for a drill head which belongs to a deep-drilling apparatus and has drilling mud flowing through it, having a plurality of radially outer and radially inner bearing rings (6, 6*, 6', 7, 7*, 7'), in the case of which the radially outer bearing rings (6, 6*, 6') are arranged coaxially over the radially inner bearing rings (7, 7*, 7'), in the case of which balls (8, 9) are arranged radially between the bearing rings (6, 6*, 6', 7, 7*, 7') and roll in raceways (6a, 7a) of the bearing rings (6, 6*, 6', 7, 7*, 7'), and in the case of which the raceways (6a, 7a) are delimited axially on either side by shoulders (6b, 7b) with shoulder surfaces (6c, 7c) which run parallel to a longitudinal bearing axis (11) and are located opposite one another, **characterized in that** the internal diameter (Di) of the shoulder surfaces (6c, 7c) of the radially outer bearing rings (6, 6*, 6') and the external diameter (Da) of the shoulder surfaces (7c) of the radially inner bearing rings (7, 7*, 7') are dimensioned such that there is an amount of radial play (S) present which performs the function of parallel radial plain bearings.

2. Bearing arrangement according to Claim 1, **characterized in that** the shoulder surfaces (6c, 7c) of the radially inner and/or of the radially outer bearing rings (6, 6*, 6', 7, 7*, 7') have grooves (12, 13) through which to channel the drilling mud.

3. Bearing arrangement according to Claim 1 or 2, **characterized in that** each radially outer and/or radially inner bearing ring (6, 6*, 6', 7, 7*, 7') is divided centrally, in a plane perpendicular to the longitudinal bearing axis (11), by the raceways (6a, 7a) and forms a 4-point bearing.

4. Bearing arrangement according to Claim 1, 2 or 3, **characterized in that** the bearing arrangement (1) has at least one row of balls with the associated bearing rings (6, 6*, 6', 7, 7*, 7'), and **in that** end rings (6', 7') at each axial end are designed to be axially longer than is customary in the case of 4-point bearings for drill heads under comparable operating loads.

5. Bearing arrangement according to one of Claims 1 to 3, **characterized in that** a plurality of rows of balls are joined together with the associated bearing rings (6, 6*, 6', 7, 7*, 7') to form a bearing stack, and **in that** the end rings (6', 7') are designed to be longer than the bearing rings (6, 6*, 6', 7, 7*, 7') arranged between said end rings (6', 7').

6. Bearing arrangement according to one of Claims 1 to 5, **characterized in that** the number of rows of balls with the associated bearing rings (6, 6*, 6', 7, 7*, 7') is greater than is customary in the case of 4-point bearings for drill heads under comparable operating loads.

7. Bearing arrangement according to one of Claims 1 to 6, **characterized in that** the shoulder surfaces (6c) of the radially outer bearing rings (6, 6*, 6') and/or the shoulder surfaces (7c) of the radially inner bearing rings (7, 7*, 7') are provided with a friction-reducing and/or wear-reducing coating (14, 15).

8. Bearing arrangement according to Claim 7, **characterized in that** the friction-reducing and/or wear-reducing coating (14, 15) consists of a tribological layer system.

9. Bearing arrangement according to Claim 8, **characterized in that** the tribological layer system is applied by means of the Triondur® coating system.

10. Bearing arrangement according to one of Claims 7 to 9, **characterized in that** the friction-reducing and/or wear-reducing coating (14, 15) consists of diamond layers.

## Revendications

1. Ensemble de roulement (1) pour une tête de forage parcourue par un liquide de rinçage d'un dispositif de sondage et de forage, avec plusieurs bagues de roulement radialement extérieures et radialement intérieures (6, 6*, 6', 7, 7*, 7'), dans lequel les bagues de roulement radialement extérieures (6, 6*, 6') sont disposées coaxialement au-dessus des bagues de roulement radialement intérieures (7, 7*, 7'), dans lequel des billes (8, 9) sont disposées radialement entre les bagues de roulement (6, 6*, 6', 7, 7*, 7') et roulent dans des sillons de roulement (6a, 7a) des bagues de roulement (6, 6*, 6', 7, 7*, 7'), et dans lequel les sillons de roulement (6a, 7a) sont limités axialement de part et d'autre par des épaulements (6b, 7b) avec des faces d'épaulement (6c, 7c) opposées l'une à l'autre et s'étendant parallèlement à un axe longitudinal du roulement (11), **caractérisé en ce que** le diamètre intérieur (Di) des faces d'épaulement (6c, 7c) des bagues de roulement radialement extérieures (6, 6*, 6') et le diamètre extérieur (Da) des faces d'épaulement (7c) des bagues de roulement radialement intérieures (7, 7*, 7') sont dimensionnés de telle manière qu'il existe un jeu radial (S) assurant la fonction de paliers lisses radiaux parallèles.

2. Ensemble de roulement selon la revendication 1, **caractérisé en ce que** les faces d'épaulement (6c, 7c) des bagues de roulement radialement intérieures et/ou radialement extérieures (6, 6*, 6', 7, 7*, 7') présentent des rainures (12, 13) pour la circulation du liquide de rinçage.

3. Ensemble de roulement selon la revendication 1 ou 2, **caractérisé en ce que** chaque bague de roulement radialement extérieure et/ou radialement intérieure (6, 6*, 6', 7, 7*, 7') est divisée au milieu par les sillons de roulement (6a, 7a) dans un plan perpendiculaire à l'axe longitudinal du roulement (11) et forme un palier à 4 points.

4. Ensemble de roulement selon la revendication 1, 2 ou 3, **caractérisé en ce que** l'ensemble de roulement (1) présente au moins une rangée de billes avec les bagues de roulement correspondantes (6, 6*, 6', 7, 7*, 7'), et **en ce que** des bagues d'extrémité axialement extrêmes (6', 7') sont axialement plus longues que ce qui est usuel dans des paliers à 4 points pour des têtes de forage soumises à des charges de fonctionnement comparables.

5. Ensemble de roulement selon l'une quelconque des revendications 1 à 3, **caractérisé en ce que** plusieurs rangées de billes avec les bagues de roulement correspondantes (6, 6*, 6', 7, 7*, 7') sont réunies en une pile de roulements, et **en ce que** les bagues d'extrémité (6', 7') sont plus longues que les bagues de roulement (6, 6*, 6', 7, 7*, 7') disposées entre ces bagues d'extrémité (6', 7').

6. Ensemble de roulement selon l'une quelconque des revendications 1 à 5, **caractérisé en ce que** le nombre des rangées de billes avec les bagues de roulement correspondantes (6, 6*, 6', 7, 7*, 7') est plus élevé que ce qui est usuel dans des paliers à 4 points pour des têtes de forage soumises à des charges de fonctionnement comparables.

7. Ensemble de roulement selon l'une quelconque des revendications 1 à 6, **caractérisé en ce que** les faces d'épaulement (6c) des bagues de roulement radialement extérieures (6, 6*, 6') et/ou les faces d'épaulement (7c) des bagues de roulement radialement intérieures (7, 7*, 7') sont dotées d'un revêtement diminuant le frottement et/ou diminuant l'usure (14, 15).

8. Ensemble de roulement selon la revendication 7, **caractérisé en ce que** le revêtement diminuant le frottement et/ou l'usure (14, 15) se compose d'un système de couches tribologique.

9. Ensemble de roulement selon la revendication 8, **caractérisé en ce que** le système de couches tribologique est déposé au moyen du procédé Triondur®.

10. Ensemble de roulement selon l'une quelconque des revendications 7 à 9, **caractérisé en ce que** le revêtement diminuant le frottement et/ou l'usure (14, 15) consiste en des couches de diamant.
